# EUROPEAN PATENT APPLICATION

(11) **EP 4 411 900 A1**
(43) Date of publication of application: **07.08.2024**
(21) Application number: 23848461.2
(22) Date of filing: 15.12.2023
(51) Int. Cl.: H01M 4/66, H01M 4/80, H01M 4/134, H01M 4/133, H01M 4/136, H01M 4/131, H01M 10/0525, H01M 10/052, H01M 4/1395, H01M 4/1393, H01M 4/1397, H01M 4/1391, H01M 4/04

(54) **SILICON-BASED NEGATIVE ELECTRODE SHEET AND PREPARATION METHOD THEREFOR, AND LITHIUM-ION BATTERY**

(30) Priority: 16.12.2022 CN 202211625901
(71) Applicant: Shanghai Xuanyi New Energy Development Co., Ltd, Shanghai 201806 (CN)
(72) Inventor: ZHANG, Hao, Shanghai 202806 (CN); WANG, Qian, Shanghai 202806 (CN); SHI, Yonggang, Shanghai, 201806 (CN); GAN, Zhijian, Shanghai 201806 (CN); LI, Yang, Shanghai 202806 (CN); ZHU, Guannan, Shanghai 201806 (CN)
(74) Representative: Studio Torta S.p.A.
(86) International application number: PCT/CN2023/139269
(87) International publication number: WO 2024/125647

(57) **Abstract**

The present disclosure provides a silicon-based anode electrode plate and a preparation method thereof, and a lithium-ion battery. The silicon-based anode electrode plate includes a porous current collector and a silicon containing material, the silicon containing material is attached to pores of the porous current collector, and the porous current collector is a porous carbon material. On the one hand, the use of the network structure of the porous carbon material itself greatly reduces the resistivity of the silicon-based anode electrode plate, thereby the toughness of the silicon-based anode electrode plate is enhanced, and the expansion of the silicon-based anode electrode plate is effectively prevented. On the other hand, the network structure of the porous carbon material itself covers the particle surface of the silicon carbon material and establishes the highly conductive, firm, and long-lasting connection between silicon particles. In addition, compared with a metal current collector, the porous carbon material has the advantages such as low density, low cost, and corrosion resistance. Therefore, the use of the porous carbon material as an anode current collector may reduce the content of a conductive agent in the silicon-based anode electrode plate, and increase the proportion of the silicon carbon material in the entire silicon-based anode electrode plate, the energy density of a battery cell is further improved.

## Description

### Cross-Reference to Related Application

The present disclosure is based on and claims priority to Chinese application 202211625901.0 filed on December 16, 2022, the disclosure of which is hereby incorporated by reference in its entirety.

### Technical Field

The present disclosure relates to the technical field of lithium-ion batteries, in particular to a silicon-based anode electrode plate and a preparation method thereof, and a lithium-ion battery.

### Background

The improvement of battery energy density mainly relies on the development of key electrode materials, such as the continuous increase in the capacity of cathod and anode electrode materials. The capacity of existing lithium battery anode electrode materials is close to its limit. Graphite anode electrodes (accounting for up to 98% of the lithium battery anode electrode materials) are taken as an example, the specific capacities of the graphite anode electrodes are all above 350 mAh/g, which are close to the upper limit value of the theoretical specific capacity of 372 mAh/g. Therefore, in order to meet the energy needs of the new generation, it is urgent to develop a new-type lithium battery anode electrode so as to improve the energy density of batteries.

At present, the advantages of silicon-based anode electrodes are apparent, and their theoretical specific capacity are up to 4200 mAh/g, which is more than 10 times that of graphite materials. In addition, the silicon-based anode electrodes provide channels for lithium ion insertion and extraction from various directions, the fast-charging performance is excellent, and it is a future development direction of anode electrodes. However, commercial applications of the silicon-based anode electrodes are limited by problems such as serious volume expansion in the lithium insertion process, poor material conductivity, first effect, and cycling performance.

### SUMMARY OF THE INVENTION

A main purpose of the present disclosure is to provide a silicon-based anode electrode plate and a preparation method thereof, and a lithium-ion battery, as to solve a problem of serious volume expansion of silicon-based anode electrodes in existing technologies.

In order to achieve the above purpose, according to one aspect of the present disclosure, a silicon-based anode electrode plate is provided, the silicon-based anode electrode plate includes a porous current collector and a silicon containing material, the silicon containing material is attached to pores of the porous current collector, and the porous current collector is a porous carbon material.

Further, the porosity of the above porous current collector is 50-90%, preferably the pore size of the porous current collector is 50-100 µm, and further preferably, the porous current collector is selected from any one or more of carbon fibers, carbon cloth, carbon nanotubes, and foam carbon.

Further, the above silicon-based anode electrode plate further includes a functional additive, the functional additive is used to bond the porous current collector and the silicon containing material, preferably the mass ratio of the porous current collector to the silicon containing material is 5-15:100, preferably the mass of the functional additive is 0.2-5% of the silicon containing material, preferably the silicon containing material is selected from any one or more of silicon oxide, silicon carbide, micrometer silicon, nanometer silicon, pre-embedded lithium modified silicon oxide, and graphite and silicon oxide mixed mixture, and further preferably, the silicon containing material is the graphite and silicon oxide mixed mixture, preferably the mass ratio of the silicon oxide to the graphite in the mixture is 1 :1-4, and preferably the functional additive is a dopamine monomer.

Further, the thickness of the above silicon-based anode electrode plate is 6-200 µm, preferably the silicon-based anode electrode plate further includes an adhesive and a conductive agent, preferably the adhesive is selected from any one or more of butadiene styrene rubber, sodium carboxymethyl cellulose, and polyvinyl alcohol, and preferably the conductive agent is selected from any one or more of carbon black, single-walled carbon nanotubes, multi-walled carbon nanotubes, and graphene.

According to another aspect of the present disclosure, a preparation method for the above silicon-based anode electrode plate is provided, and the preparation method includes: Step S1, coating anode electrode slurry including a silicon containing material on the surface of a porous current collector, to obtain an active current collector; and Step S2, drying, roller-pressing, and plate-punching the active current collector, to obtain the silicon-based anode electrode plate.

Further, the above Step S1 includes performing surface modification treatment on the porous current collector, and preferably the surface modification treatment process includes: Step S11, performing oxidation treatment on the porous current collector by oxidant solution, to obtain an oxidized current collector; Step S12, washing the oxidized current collector, to obtain a washed current collector; and Step S13, immersing the washed current collector in functional additive solution, to obtain a modified porous current collector; the oxidant solution is nitric acid solution with a concentration of 50-90wt%, preferably the time of the oxidation treatment is 20-60 min, and preferably the residual amount of NO₃⁻ in the washed current collector is <50 ppm; preferably the functional additive solution is dopamine monomer solution, preferably the concentration of the dopamine monomer solution is 2-3 g/L, and preferably a solvent in the dopamine monomer solution is Tris-HCl buffer solution; and preferably the immersing time is 10-24 h.

Further, in the above Step S1, the relative surface of the porous current collector is coated simultaneously, preferably the coating speed is 10-50 m/min, preferably the solid content of the anode electrode slurry is 35-50wt%, and preferably the viscosity of the anode electrode slurry is 3000-7000 mPa.s⁻¹.

Further, in the above Step S2, the drying temperature is 60-150 °C.

According to another aspect of the present disclosure, a lithium-ion battery including a cathode electrode plate, an electrolyte, and an anode electrode plate is provided, and the anode electrode plate is the aforementioned silicon-based anode electrode plate.

Further, a metal crimping sleeve is used to connect a porous current collector of the silicon-based anode electrode plate and a metal wire of the lithium-ion battery.

By applying technical schemes of the present disclosure, on the one hand, the use of the network structure of the porous carbon material itself greatly reduces the resistivity of the silicon-based anode electrode plate, thereby the toughness of the silicon-based anode electrode plate is enhanced, and the expansion of the silicon-based anode electrode plate is effectively prevented. On the other hand, the network structure of the porous carbon material itself covers the particle surface of the silicon carbon material and establishes the highly conductive, firm, and long-lasting connection between silicon particles. Even if the volume expansion of the silicon particles occurs and cracks begin to appear, the porous carbon material may still be used to maintain the good connection between the silicon particles, thereby the rupture of the silicon carbon material may be prevented, and the lithium-ion battery has the relatively high capacity, as well as the excellent cycling stability, first effect and other electrical properties. In addition, compared with a metal current collector, the porous carbon material has the advantages such as low density, low cost, and corrosion resistance. Therefore, the use of the porous carbon material as an anode current collector may reduce the content of the conductive agent in the silicon-based anode electrode plate, and increase the proportion of the silicon carbon material in the entire silicon-based anode electrode plate, the energy density of a battery cell is further improved.

### Brief Description of the Drawings

Drawings of the description for constituting a part of the present disclosure are used to provide further understanding of the present disclosure. Schematic embodiments of the present disclosure and descriptions thereof are used to explain the present disclosure and do not constitute improper limitations on the present disclosure. In the drawings:
Fig. 1 shows a scanning electron microscope (SEM) image of a modified carbon fiber obtained according to Embodiment 1 of the present disclosure;
Fig. 2 shows an SEM image of a silicon-based anode electrode plate obtained according to Embodiment 1 of the present disclosure.

### Detailed Description of the invention

It should be noted that embodiments in the present disclosure and features in the embodiments may be combined with each other in the case without conflicting. The present disclosure is described in detail below with reference to the drawings and in combination with the embodiments.

As analyzed in the background of the present disclosure, there is a problem of serious volume expansion of silicon-based anode electrodes in existing technologies. In order to solve this problem, the present disclosure provides a silicon-based anode electrode plate and a preparation method thereof, and a lithium-ion battery.

In a typical implementation mode of the present disclosure, a silicon-based anode electrode plate is provided, the silicon-based anode electrode plate includes a porous current collector and a silicon containing material, the silicon containing material is attached to pores of the porous current collector, and the porous current collector is a porous carbon material.

Based on the silicon-based anode electrode plate of the present disclosure, on the one hand, the use of the network structure of the porous carbon material itself greatly reduces the resistivity of the silicon-based anode electrode plate, thereby the toughness of the silicon-based anode electrode plate is enhanced, and the expansion of the silicon-based anode electrode plate is effectively prevented. On the other hand, the network structure of the porous carbon material itself covers the particle surface of the silicon containing material and establishes the highly conductive, firm, and long-lasting connection between silicon particles. Even if the volume expansion of the silicon particles occurs and cracks begin to appear, the porous carbon material may still be used to maintain the good connection between the silicon particles, thereby the rupture of the silicon containing material may be prevented, and the lithium-ion battery has the relatively high capacity, as well as the excellent cycling stability, first effect and other electrical properties. In addition, compared with a metal current collector, the porous carbon material has the advantages such as low density, low cost, and corrosion resistance. Therefore, the use of the porous carbon material as an anode current collector may reduce the content of the conductive agent in the silicon-based anode electrode plate, and increase the proportion of the silicon containing material in the entire silicon-based anode electrode plate, the energy density of a battery cell is further improved.

In order to improve the permeability efficiency and effect of the silicon containing material in the pores of the porous current collector, preferably the porosity of the above porous current collector is 50-90%, preferably the pore size of the porous current collector is 50-100 µm, and further preferably, the porous current collector is selected from any one or more of carbon fibers, carbon cloth, carbon nanotubes, and foam carbon.

In an embodiment of the present disclosure, the above silicon-based anode electrode plate further includes a functional additive, the functional additive is used to bond the porous current collector and the silicon containing material, preferably the mass ratio of the porous current collector to the silicon containing material is 5-15:100, preferably the mass of the functional additive is 0.2-5% of the silicon containing material, preferably the silicon containing material is selected from any one or more of silicon oxide, silicon carbide, micrometer silicon, nanometer silicon, pre-embedded lithium modified silicon oxide, and graphite and silicon oxide mixed mixture, and further preferably, the silicon containing material is the graphite and silicon oxide mixed mixture, preferably the mass ratio of the silicon oxide to the graphite in the mixture is 1 :1-4, and preferably the functional additive is a dopamine monomer.

The functional additive is beneficial for improving the infiltration degree of the anode electrode slurry into the pores of the porous current collector, and for better bonding between the anode electrode slurry, especially the silicon carbon material therein, and the pores of the porous current collector. The preferred types of the silicon containing material and the functional additive, the preferred mass ratio of the porous current collector, the silicon containing material and the functional additive, and the functional additive are helpful to achieve the firm adhesion of the silicon containing material to the porous current collector, while the proportion of the silicon containing material in the same mass of the anode electrode plate is improved as much as possible, thereby the electrical properties such as the capacity of the lithium-ion battery are improved.

In an embodiment of the present disclosure, the thickness of the above silicon-based anode electrode plate is 6-200 µm, preferably the silicon-based anode electrode plate further includes an adhesive and a conductive agent, preferably the adhesive is selected from any one or more of butadiene styrene rubber, sodium carboxymethyl cellulose, and polyvinyl alcohol, and preferably the conductive agent is selected from any one or more of carbon black, single-walled carbon nanotubes, multi-walled carbon nanotubes, and graphene.

For the current collector with the same thickness, a technical scheme of coating the anode electrode slurry on the surface of the porous current collector is helpful to reduce the thickness of the silicon-based anode electrode plate, preferably the thickness of the silicon-based anode electrode plate is within the above range, which is helpful to prepare the silicon-based anode electrode plate with thinner thickness, higher magnification, and higher energy density. The adhesive is beneficial for improving the bonding effect between various components and the porous current collector, and the conductive agent is beneficial for improving the overall conductivity of the silicon-based anode electrode plate. The preferred types of the adhesive and the conductive agent are helpful to exploit respective advantages and achieve better synergistic effects among the components, thereby the lithium-ion battery with the excellent comprehensive electrical properties is obtained.

In another typical implementation mode of the present disclosure, a preparation method for the aforementioned silicon-based anode electrode plate is provided, and the preparation method includes: Step S1, anode electrode slurry including a silicon containing material is coated on the surface of a porous current collector, to obtain an active current collector; and Step S2, drying, roller-pressing, and plate-punching are performed the active current collector, to obtain the silicon-based anode electrode plate.

According to the above preparation method, on the one hand, the use of the network structure of the porous carbon material itself greatly reduces the resistivity of the silicon-based anode electrode plate, thereby the toughness of the silicon-based anode electrode plate is enhanced, and the expansion of the silicon-based anode electrode plate is effectively prevented. On the other hand, the network structure of the porous carbon material itself covers the particle surface of the silicon containing material and establishes the highly conductive, firm, and long-lasting connection between silicon particles. Even if the volume expansion of the silicon particles occurs and cracks begin to appear, the porous carbon material may still be used to maintain the good connection between the silicon particles, thereby the rupture of the silicon containing material may be prevented, and the lithium-ion battery has the relatively high capacity, as well as the excellent cycling stability, first effect and other electrical properties. In addition, compared with a metal current collector, the porous carbon material has the advantages such as low density, low cost, and corrosion resistance. Therefore, the use of the porous carbon material as an anode current collector may reduce the content of the conductive agent in the silicon-based anode electrode plate, and increase the proportion of the silicon containing material in the entire silicon-based anode electrode plate, the energy density of a battery cell is further improved. In addition, the above preparation method is simple and easy to industrial production.

The above coating mode for the anode electrode slurry may be a conventional coating mode in the existing technologies such as extrusion coating, and it is not repeatedly described here.

In order to improve the uniformity of the anode electrode slurry, preferably the silicon carbon material and the conductive agent are firstly dry-mixed, preferably the stirring speed of dry-mixing is 20-40 r/min and the time is 20-50 min, then the adhesive is added, the stirring speed of mixing is 20-50 r/min, the dispersion rotation speed is controlled to 40-100 r/min, the dispersion disc is 3000-5000 r/min, the dispersion time is 3-5 h for dispersion, and after being dispersed uniformly, the remaining amount of water is added, slurry obtained is stirred, and sieved to prepare the anode electrode slurry.

In some embodiments of the present disclosure, the above Step S1 includes performing surface modification treatment on the porous current collector, and preferably the surface modification treatment process includes: Step S11, oxidation treatment is performed on the porous current collector by oxidant solution, to obtain an oxidized current collector; Step S12, the oxidized current collector is washed, to obtain a washed current collector; and Step S13, the washed current collector is immersed in functional additive solution, to obtain a modified porous current collector; the oxidant solution is nitric acid solution with a concentration of 50-90wt%, preferably the time of the oxidation treatment is 20-60 min, and preferably the residual amount of NO₃⁻ in the washed current collector is <50 ppm; preferably the functional additive solution is dopamine monomer solution, preferably the concentration of the dopamine monomer solution is 2-3 g/L, and preferably a solvent in the dopamine monomer solution is Tris-HCl buffer solution; and preferably the immersing time is 10-24 h.

The above modification treatment on the surface of the porous current collector is beneficial for changing the surface roughness, groups contained on the surface, and other properties of the porous current collector, thereby the probability of the anode electrode slurry infiltrating into its pores by the surface of the porous current collector is improved, and the anode electrode slurry including the silicon carbon material is added into the interior of the porous current collector.

The use of the oxidant solution for the oxidation treatment of the porous current collector may generate active groups such as carboxyl and hydroxyl on its surface, and the amounts of these groups are increased with the prolongation of the oxidation time and the increase of the temperature. Preferably the time of the oxidation treatment is 20-60 min, which significantly increases various oxygen-containing polar groups and grooves contained on the surface of the porous current collector obtained, thereby it is beneficial for improving the bonding force between the porous current collector and the anode electrode slurry, and further, it is more helpful for the anode electrode slurry to infiltrate into the pores of the porous current collector.

The concentration of the nitric acid solution is too low, it is not beneficial for improving the efficiency of the oxidation treatment, and the concentration of the nitric acid solution is too high, the porous current collector may be corroded by the strong acid in the oxidation process, so that the loss of strength of the porous current collector is relatively large, and its properties are affected. Preferably the oxidant solution is nitric acid solution with a concentration of 50-90wt%. Preferably the residual amount of NO₃⁻ in the washed carbon material is <50 ppm, which is beneficial for reducing the impact of NO₃⁻ on the properties of the silicon-based anode electrode plate.

Preferably the immersing time is 10-24 h, which is beneficial for more fully adsorbing the functional additive into the washed current collector.

In order to prevent the anode electrode slurry from leaking from the pores of the porous current collector in the coating process, preferably in the above Step S1, the relative surface of the porous current collector is coated simultaneously, and preferably the coating speed is 10-50 m/min, which is beneficial for balancing the coating efficiency and coating effect. Too thin or too thick anode electrode slurry is not beneficial for the coating of the anode electrode slurry, preferably the solid content of the anode electrode slurry is 35-50wt%, and preferably the viscosity of the anode electrode slurry is 3000-7000 mPa.s⁻¹, which is beneficial for coating more smoothly and reducing the subsequent drying workload as much as possible, thereby it is more beneficial for attaching the anode electrode slurry to the porous current collector.

In order to improve the efficiency and effect of drying, and save energy as much as possible, preferably in the above Step S2, the drying temperature is 60-150 °C.

In another typical implementation mode of the present disclosure, a lithium-ion battery including a cathode electrode plate, an electrolyte, and an anode electrode plate is provided, and the anode electrode plate is the aforementioned silicon-based anode electrode plate.

The lithium-ion battery, including the silicon-based anode electrode plate of the present disclosure, has the relatively high capacity, excellent cycling stability, first effect, and other electrical properties.

The above porous current collector is a non-metal material. In order to integrate the silicon-based anode electrode plate with a metal wire better, preferably a metal crimping sleeve is used to connect the porous current collector of the above silicon-based anode electrode plate and the metal wire of the lithium-ion battery. Preferably under a pressure of 50-1000 MPa, the silicon-based anode electrode plate is more tightly connected with the metal wire, thereby the reliability of the lithium-ion battery is improved. In addition, the porous current collector in the present disclosure has the strong thermal conductivity, so that a joint between the silicon-based anode electrode plate and the metal wire is fast in heat dissipation, and its service life is improved.

The beneficial effects of the present disclosure are further described below in combination with embodiments.

### Embodiment 1

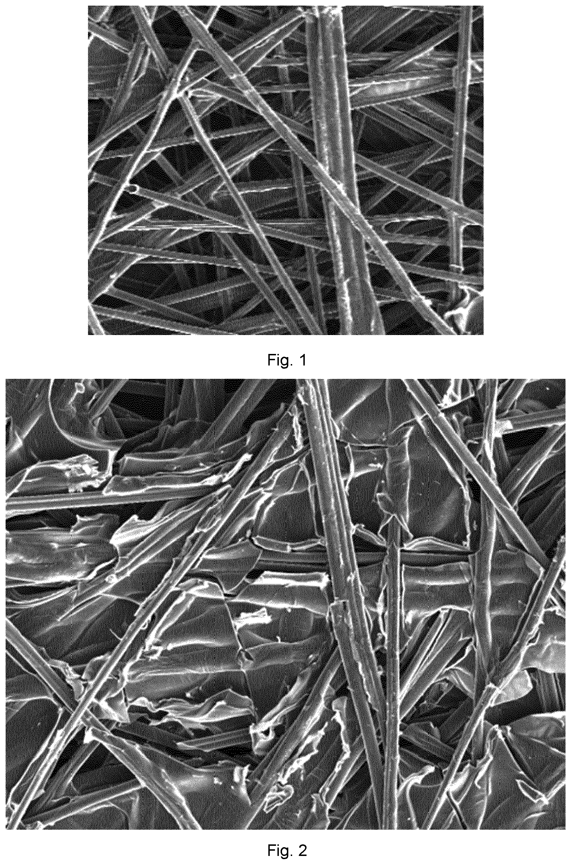

10 parts by weight of carbon fibers TGP-H-60 were oxidized with 60wt% of a nitric acid for 30 min, to obtain oxidized carbon fibers; a residual oxidant on the oxidized carbon fibers was washed with water, after eight water washing tests, residual NO₃⁻ was 40 ppm, and washed carbon fibers were obtained; the washed carbon fibers were immersed in dopamine monomer buffer solution (the concentration was 2 g/L, and it contained 3 parts by weight of a dopamine monomer) for 24 h, to obtain modified carbon fibers. The porosity of the modified carbon fibers was 80%, and the pore size was 50-95 µm. An SEM image of the modified carbon fibers was shown in Fig. 1.

The specific mixing process was that 25 parts by weight of silicon oxide SiO were firstly mixed with 75 parts by weight of graphite, and dry-mixed with 2 parts by weight of carbon black at a stirring speed of 20 r/min for 30 min, then 5 parts by weight of a polyacrylic acid were added and stirred at a stirring speed of 25 r/min for 30 min, the dispersion rotation speed was 40 r/min, the dispersion disc was 4000 r/min, it was dispersed for 3 h, and it was adjusted by adding water to obtain anode electrode slurry with a solid content of 35wt% and a viscosity of 4200 mPa.s⁻¹.

A double-sided coating technology was used, the coating speed was controlled to 30 m/min, the anode electrode slurry was coated on the surface of the modified carbon fibers, and after drying at 100 °C, roller-pressing, and plate-punching, a silicon-based anode electrode plate was formed, and an SEM image of the silicon-based anode electrode plate was shown in Fig. 2.

### Embodiment 2

The difference from Embodiment 1 was that the dopamine monomer buffer solution contained 0.2 parts by weight of the dopamine monomer, and ultimately a silicon-based anode electrode plate was obtained.

### Embodiment 3

The difference from Embodiment 1 was that the dopamine monomer buffer solution contained 5 parts by weight of the dopamine monomer, and ultimately a silicon-based anode electrode plate was obtained.

### Embodiment 4

The difference from Embodiment 1 was that the dopamine monomer buffer solution contained 0.1 parts by weight of the dopamine monomer, and ultimately a silicon-based anode electrode plate was obtained.

### Embodiment 5

The difference from Embodiment 1 was that the porous current collector (carbon cloth) was added, the porosity of the modified carbon fibers obtained was 90%, the pore size was 50-80 µm, and ultimately a silicon-based anode electrode plate was obtained.

### Embodiment 6

The difference from Embodiment 1 was that the concentration of the dopamine monomer buffer solution was 3 g/L, the porosity of the modified carbon fibers obtained was 45%, the pore size was 50-60 µm, and ultimately a silicon-based anode electrode plate was obtained.

### Embodiment 7

The difference from Embodiment 1 was that the nitric acid solution with a concentration of 50wt% was added, the porosity of the modified carbon fibers obtained was 50%, the pore size was 50-70 µm, and ultimately a silicon-based anode electrode plate was obtained.

### Embodiment 8

The difference from Embodiment 1 was that the nitric acid solution with a concentration of 90wt% was added, the porosity of the modified carbon fibers obtained was 80%, the pore size was 50-80 µm, and ultimately a silicon-based anode electrode plate was obtained.

### Embodiment 9

The difference from Embodiment 1 was that the nitric acid solution with a concentration of 40wt% was added, the porosity of the modified carbon fibers obtained was 45%, the pore size was 50-70 µm, and ultimately a silicon-based anode electrode plate was obtained.

### Embodiment 10

The difference from Embodiment 1 was that the time of the oxidation treatment was 20 min, the porosity of the modified carbon fibers obtained was 50%, the pore size was 50-70 µm, and ultimately a silicon-based anode electrode plate was obtained.

### Embodiment 11

The difference from Embodiment 1 was that the time of the oxidation treatment was 60 min, the porosity of the modified carbon fibers obtained was 80%, the pore size was 50-80 µm, and ultimately a silicon-based anode electrode plate was obtained.

### Embodiment 12

The difference from Embodiment 1 was that the time of the oxidation treatment was 15 min, the porosity of the modified carbon fibers obtained was 45%, the pore size was 30-48 µm, and ultimately a silicon-based anode electrode plate was obtained.

### Embodiment 13

The difference from Embodiment 1 was that the immersing time was 10 h, the porosity of the modified carbon fibers obtained was 80%, the pore size was 50-80 µm, and ultimately a silicon-based anode electrode plate was obtained.

### Embodiment 14

The difference from Embodiment 1 was that the immersing time was 24 h, the porosity of the modified carbon fibers obtained was 80%, the pore size was 50-100 µm, and ultimately a silicon-based anode electrode plate was obtained.

### Embodiment 15

The difference from Embodiment 1 was that the immersing time was 5 h, the porosity of the modified carbon fibers obtained was 40%, the pore size was 30-45 µm, and ultimately a silicon-based anode electrode plate was obtained.

### Embodiment 16

The difference from Embodiment 1 was that the double-sided coating technology was used, the coating speed was controlled to 50 m/min, the porosity of the modified carbon fibers obtained was 80%, the pore size was 50-80 µm, and ultimately a silicon-based anode electrode plate was obtained.

### Embodiment 17

The difference from Embodiment 1 was that the solid content of the anode electrode slurry was 50wt%, the porosity of the modified carbon fibers obtained was 80%, the pore size was 50-80 µm, and ultimately a silicon-based anode electrode plate was obtained.

### Embodiment 18

The difference from Embodiment 1 was that the viscosity of the anode electrode slurry was 7000 mPa.s⁻¹, the porosity of the modified carbon fibers obtained was 80%, the pore size was 50-80 µm, and ultimately a silicon-based anode electrode plate was obtained.

### Embodiment 19

The difference from Embodiment 1 was that the anode electrode slurry was coated on the surface of the modified carbon fibers, and after drying at 60 °C, roller-pressing, and plate-punching, a silicon-based anode electrode plate was formed.

### Embodiment 20

The difference from Embodiment 1 was that the silicon oxide SiO was 50 parts by weight, the graphite was 50 parts by weight, and ultimately a silicon-based anode electrode plate was obtained.

### Embodiment 21

The difference from Embodiment 1 was that the silicon oxide SiO was 20 parts by weight, the graphite was 80 parts by weight, and ultimately a silicon-based anode electrode plate was obtained.

### Embodiment 22

The difference from Embodiment 1 was that the silicon oxide SiO was 60 parts by weight, the graphite was 40 parts by weight, and ultimately a silicon-based anode electrode plate was obtained.

### Embodiment 23

The difference from Embodiment 1 was that the carbon fiber TGP-H-60 was 15 parts by weight, and ultimately a silicon-based anode electrode plate was obtained.

### Embodiment 24

The difference from Embodiment 1 was that the carbon fiber TGP-H-60 was 5 parts by weight, and ultimately a silicon-based anode electrode plate was obtained.

### Embodiment 25

The difference from Embodiment 1 was that the carbon fiber TGP-H-60 was 4 parts by weight, and ultimately a silicon-based anode electrode plate was obtained.

### Embodiment 26

The difference from Embodiment 1 was that the anode electrode slurry was directly coated on the surface of unmodified carbon fibers, and after drying at 100 °C, roller-pressing, and plate-punching, a silicon-based anode electrode plate was formed.

### Contrast example 1

The difference from Embodiment 1 was that the anode electrode slurry was directly coated on the surface of a copper current collector, and after drying at 100°C, roller-pressing, and plate-punching, a copper-based anode electrode plate was formed.

The porosities of the carbon fibers, the pore sizes, and the thickness values of the electrode plates obtained in Embodiments 1 to 26 were listed in Table 1.

**Table 1**

| Embodiment | Porosity/% | Pore size/µm | Thickness of electrode plate/µm |
|---|---|---|---|
| Embodiment 1 | 80 | 50-95 | 100 |
| Embodiment 2 | 90 | 50-80 | 50 |
| Embodiment 3 | 60 | 50-80 | 150 |
| Embodiment 4 | 85 | 70-80 | 100 |
| Embodiment 5 | 80 | 50-80 | 100 |
| Embodiment 6 | 45 | 50-60 | 100 |
| Embodiment 7 | 50 | 50-70 | 100 |
| Embodiment 8 | 80 | 50-80 | 100 |
| Embodiment 9 | 45 | 50-70 | 100 |
| Embodiment 10 | 50 | 50-70 | 100 |
| Embodiment 11 | 80 | 50-80 | 100 |
| Embodiment 12 | 45 | 30-48 | 100 |
| Embodiment 13 | 80 | 50-80 | 100 |
| Embodiment 14 | 80 | 50-100 | 100 |
| Embodiment 15 | 40 | 30-45 | 100 |
| Embodiment 16 | 80 | 50-80 | 100 |
| Embodiment 17 | 80 | 50-80 | 100 |
| Embodiment 18 | 80 | 50-80 | 100 |
| Embodiment 19 | 80 | 50-95 | 100 |
| Embodiment 20 | 80 | 50-95 | 100 |
| Embodiment 21 | 75 | 50-80 | 100 |
| Embodiment 22 | 45 | 40-60 | 100 |
| Embodiment 23 | 80 | 50-85 | 100 |
| Embodiment 24 | 75 | 50-95 | 100 |
| Embodiment 25 | 80 | 50-80 | 100 |
| Embodiment 26 | 60 | 30-55 | 100 |
| Contrast example 1 | - | - | - |

The above silicon-based anode electrode plates in Embodiments 1 to 26 were respectively assembled into batteries with a nickel-cobalt-manganese (NCM) ternary cathod electrode (the model was WXO4Mg), and the copper-based anode electrode plate in Contrast example 1 was assembled into a battery with the NCM ternary cathod electrode (the model was WXO4Mg). The number of cycles of the batteries was respectively tested at 25 °C, a voltage range of 2.5-4.25 V, and 1C when the retention rate of cycling capacity was 80%, and test results were listed in Table 2.

**Table 2**

| Embodiment | Number of cycles |
|---|---|
| Embodiment 1 | 600 |
| Embodiment 2 | 570 |
| Embodiment 3 | 700 |
| Embodiment 4 | 510 |
| Embodiment 5 | 600 |
| Embodiment 6 | 650 |
| Embodiment 7 | 580 |
| Embodiment 8 | 600 |
| Embodiment 9 | 500 |
| Embodiment 10 | 560 |
| Embodiment 11 | 614 |
| Embodiment 12 | 500 |
| Embodiment 13 | 600 |
| Embodiment 14 | 610 |
| Embodiment 15 | 520 |
| Embodiment 16 | 600 |
| Embodiment 17 | 610 |
| Embodiment 18 | 620 |
| Embodiment 19 | 605 |
| Embodiment 20 | 608 |
| Embodiment 21 | 610 |
| Embodiment 22 | 500 |
| Embodiment 23 | 605 |
| Embodiment 24 | 610 |
| Embodiment 25 | 520 |
| Embodiment 26 | 500 |
| Contrast example 1 | 200 |

From the above description, it may be seen that the above embodiments of the present disclosure achieved the following technical effects.

On the one hand, the use of the network structure of the porous carbon material itself greatly reduced the resistivity of the silicon-based anode electrode plate, thereby the toughness of the silicon-based anode electrode plate was enhanced, and the expansion of the silicon-based anode electrode plate was effectively prevented. On the other hand, the network structure of the porous carbon material itself covered the particle surface of the silicon carbon material and establishes the highly conductive, firm, and long-lasting connection between silicon particles. Even if the volume expansion of the silicon particles occured and cracks begin to appear, the porous carbon material may still be used to maintain the good connection between the silicon particles, thereby the rupture of the silicon carbon material may be prevented, and the lithium-ion battery had the relatively high capacity, as well as the excellent cycling stability, first effect and other electrical properties. In addition, compared with a metal current collector, the porous carbon material had the advantages such as low density, low cost, and corrosion resistance. Therefore, the use of the porous carbon material as an anode current collector may reduce the content of the conductive agent in the silicon-based anode electrode plate, and increase the proportion of the silicon carbon material in the entire silicon-based anode electrode plate, the energy density of a battery cell was further improved.

The above are only preferred embodiments of the present disclosure and are not intended to limit the present disclosure. For those skilled in the art, the present disclosure may have various modifications and variations. Any modifications, equivalent replacements, improvements and the like made within the spirit and principles of the present disclosure shall be contained within the scope of protection of the present disclosure.

## Claims

1. A silicon-based anode electrode plate, wherein the silicon-based anode electrode plate comprises a porous current collector and a silicon containing material, the silicon containing material is attached to pores of the porous current collector, and the porous current collector is a porous carbon material.

2. The silicon-based anode electrode plate according to claim 1, wherein the porosity of the porous current collector is 50-90%, preferably the pore size of the porous current collector is 50-100 µm, and further preferably, the porous current collector is selected from any one or more of carbon fibers, carbon cloth, carbon nanotubes, and foam carbon.

3. The silicon-based anode electrode plate according to claim 1 or 2, wherein the silicon-based anode electrode plate further comprises a functional additive, the functional additive is used to bond the porous current collector and the silicon containing material, preferably the mass ratio of the porous current collector to the silicon containing material is 5-15:100, preferably the mass of the functional additive is 0.2-5% of the silicon containing material, preferably the silicon containing material is selected from any one or more of silicon oxide, silicon carbide, micrometer silicon, nanometer silicon, pre-embedded lithium modified silicon oxide, and graphite and silicon oxide mixed mixture, and further preferably, the silicon containing material is the graphite and silicon oxide mixed mixture, preferably the mass ratio of the silicon oxide to the graphite in the mixture is 1:1-4, and preferably the functional additive is a dopamine monomer.

4. The silicon-based anode electrode plate according to any one of claims 1 to 3, wherein the thickness of the silicon-based anode electrode plate is 6-200 µm, preferably the silicon-based anode electrode plate further comprises an adhesive and a conductive agent, preferably the adhesive is selected from any one or more of butadiene styrene rubber, sodium carboxymethyl cellulose, and polyvinyl alcohol, and preferably the conductive agent is selected from any one or more of carbon black, single-walled carbon nanotubes, multi-walled carbon nanotubes, and graphene.

5. A preparation method for the silicon-based anode electrode plate according to any one of claims 1 to 4, wherein the preparation method comprises:
Step S1, coating anode electrode slurry comprising a silicon containing material on the surface of a porous current collector, to obtain an active current collector; and
Step S2, drying, roller-pressing, and plate-punching the active current collector, to obtain the silicon-based anode electrode plate.

6. The preparation method according to claim 5, wherein Step S1 comprises performing surface modification treatment on the porous current collector, and preferably the surface modification treatment process comprises:
Step S11, performing oxidation treatment on the porous current collector by oxidant solution, to obtain an oxidized current collector;
Step S12, washing the oxidized current collector, to obtain a washed current collector; and
Step S13, immersing the washed current collector in functional additive solution, to obtain a modified porous current collector;
the oxidant solution is nitric acid solution with a concentration of 50-90wt%, preferably the time of the oxidation treatment is 20-60 min, and preferably the residual amount of NO₃⁻ in the washed current collector is <50 ppm;
preferably the functional additive solution is dopamine monomer solution, preferably the concentration of the dopamine monomer solution is 2-3 g/L, and preferably a solvent in the dopamine monomer solution is Tris-HCl buffer solution; and
preferably the immersing time is 10-24 h.

7. The preparation method according to claim 5 or 6, wherein in Step S1,
the relative surface of the porous current collector is coated simultaneously, preferably the coating speed is 10-50 m/min, preferably the solid content of the anode electrode slurry is 35-50wt%, and preferably the viscosity of the anode electrode slurry is 3000-7000 mPa.s⁻¹.

8. The preparation method according to claim 5 or 6, wherein in Step S2,
the drying temperature is 60-150 °C.

9. A lithium-ion battery comprising a cathode electrode plate, an electrolyte, and an anode electrode plate, wherein the anode electrode plate is the silicon-based anode electrode plate according to any one of claims 1-4.

10. The lithium-ion battery according to claim 9, wherein a metal crimping sleeve is used to connect a porous current collector of the silicon-based anode electrode plate and a metal wire of the lithium-ion battery.
